Europäisches Patentamt

European Patent Office

Office européen des brevets

(11) Publication number: 0 512 494 A2

# EUROPEAN PATENT APPLICATION

(21) Application number: 92107623.8

(22) Date of filing: 06.05.92

(51) Int. Cl.5: **G11B 23/04**, G11B 15/60

(30) Priority: 10.05.91 JP 105613/91
15.07.91 JP 173749/91

(43) Date of publication of application:
**11.11.92 Bulletin 92/46**

(84) Designated Contracting States:
**BE CH DE ES FR GB IT LI NL SE**

(71) Applicant: **APLS CO., LTD.**
**860-2, Oaza misaki, Kuse-cho**
**Maniwa-gun, Okayama-ken(JP)**

(72) Inventor: **Morita, Susumu**
**B404, 1-27, Ichiba-cho, Kuraken**
**Nisinomiya-shi, Hyogo(JP)**

(74) Representative: **Füchsle, Klaus, Dipl.-Ing. et al**
**Hoffmann . Eitle & Partner Patentanwälte**
**Arabellastrasse 4**
**W-8000 München 81(DE)**

(54) Two-piece guide roller.

(57) A two-piece guide roller for a cassette tape comprises an inner cylinder (1) and an outer cylinder (3). The inner cylinder (1) is made of a material which is different from a material of which the outer cylinder (3) is made. The two-piece guide roller causes substantially no scratches on the tape.

FIG. 1

EP 0 512 494 A2

## BACKGROUND OF THE INVENTION

### Field of the Invention

The present invention relates to a guide roller which is used in a cassette tape, for example, a VTR (video tape recorder) cassette tape.

### Description of the Related Art

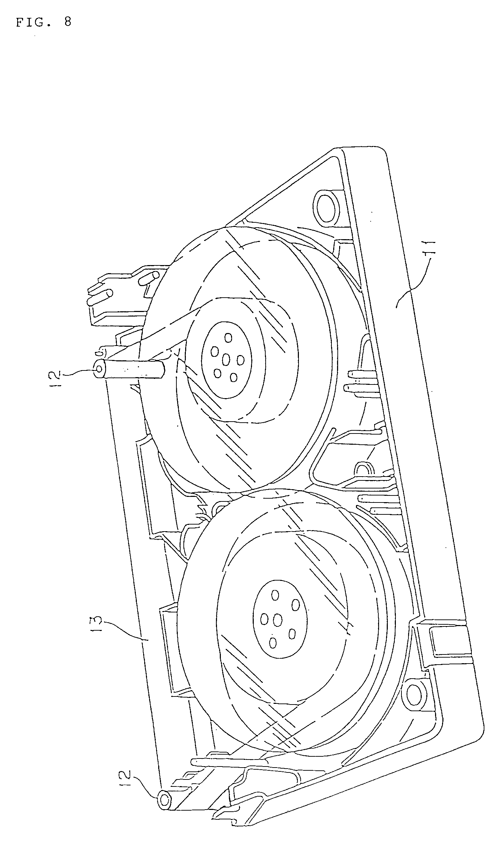

In a VTR cassette tape as shown in Figure 8, a magnetic tape 13 is placed in a cassette case 11 and the tape 13 runs (or slides) over a guide pin 12, which is conventionally made of a metal or a resin and which is of a one-piece type. Since the magnetic tape runs over and thus directly contacts with (namely, slide over) an outer surface of the guide pin, scratches tend to he caused on the tape. The number of the scratches gets larger and the depth of the scratches gets deeper with the number of the use of the tape, resulting in increase of dropouts during a playback operation of the tape.

In order to suppress the occurrence of such scratches, the metal guide pin should be produced by a complex process in which the outer surface of the guide pin is made rigid and to have an optimum surface roughness by abrasion. Such a complex process makes a price of the guide pin expensive. In addition, the magnetic tape for the cassette should he coated with a lubricant and/or optimally adjusted in its surface roughness.

In the case where a resin made guide pin is used, the guide pin has inherently a larger friction factor with the tape compared with the metal guide pin. On the last stage of FF (fast forward) and/or RW (rewind) mode of VTR in which a PV (frictional heat at bearing) value gets maximum, the tape running may be suppressed, whereby practical use may be impossible. This is because the sliding direct contact of the guide pin with the cassette tape.

## SUMMARY OF THE INVENTION

The inventor have found that the main reason which causes the above problems resides in that the conventional guide pin is the one-piece type and the tape slides over the guide pin with direct contact relation. According to the present invention, there is provided a two-piece guide roller comprising an inner cylinder and an outer cylinder. The inner cylinder is mounted on a boss of one half of a cassette case and fixed so that it cannot turn, whereby the outer cylinder turns with the tape while the outer cylinder is in sliding direct contact with the inner cylinder. Therefore, the two-piece guide roller can replace the sliding direct contact of the conventional guide pin with the tape with a sliding direct contact of the inner cylinder with the outer cylinder. With the use of the two-piece guide roller, the occurrence of the scratches on the tape is suppressed or eliminated while the original function of the guide pin is not adversely affected.

## BRIEF DESCRIPTION OF THE DRAWINGS

Figure 1 schematically shows a cross-sectional view of the two-piece guide roller according to the present invention,

Figure 2 schematically shows a cross-sectional view of an inner cylinder of the two-piece guide roller according to the present invention,

Figure 3 schematically shows a cross-sectional view of an outer cylinder of the two-piece guide roller according to the present invention,

Figure 4 schematically shows a plane view and a side view of the inner cylinder of another embodiment of the two-piece guide roller according to the present invention,

Figure 5 schematically shows a plane view and a side view of the outer cylinder of another embodiment of the two-piece roller according to the present invention,

Figure 6 schematically shows a side view of the two-piece guide roller assembly comprising the inner cylinder of Figure 4 and the outer cylinder of Figure 5,

Figure 7 schematically shows a plane view and a side view of a cut-ring washer used in the embodiment shown in Figure 6,

Figure 8 schematically shows a lower half of a cassette case for a VTR tape in which the tape has been installed,

Figure 9 schematically shows side views of further embodiments of the two-piece guide roller according to the present invention,

2

Figure 10 schematically shows sectional views of two sets of the inner cylinder and the outer cylinder of further embodiments of the two piece guide roller according to the present invention, and
Figure 11 schematically and partially shows one preferred embodiment in which the two-piece guide roller is placed in the cassette case.

DETAILED DESCRIPTION OF THE INVENTION

The two-piece guide roller according to the present invention may be made easily and in large number by, for example, injection molding process of so-called an engineering plastic which is commercially cheap available such as a polyamide resin, a polybutylene terephthalate (PBT) resin and a polyacetal (POA) resin.

The two-piece guide roller can be made by assembling the outer cylinder and the inner cylinder through snap-fitting with utilizing characters of the resins which constitute the inner cylinder and the outer cylinder. Such assembly may be carried out easily by using a conventional automatic assembling machine at a low cost and in a large number.

In another embodiment, the two piece guide roller according to the present invention may be assembled by inserting, into the outer cylinder, the inner cylinder having a flange at its one end and a groove on a outer surface portion near its other end and then placing a cut-ring washer in the groove.

The cassette tape may be also assembled by placing the inner cylinder on each hub of a lower cassette half beforehand, installing the outer cylinder on the inner cylinder, and then inserting each hub of an upper cassette half into the inner cylinder and fixing the upper half and the lower half together by, for example, self-tapping screws.

An outer circumferential surface of the inner cylinder is so made that when an inner circumferential surface of the outer cylinder contacts with the outer circumferential surface of the inner cylinder, a contact area between the two surfaces is small. The inner circumferential surface of the outer cylinder is so made that when the outer circumferential surface of the inner cylinder contacts with the inner circumferential surface of the outer cylinder, a contact area between the two surfaces is small. For example, a surface roughness expressed as Rmax (maximum height) of the outer surface of the inner cylinder (or the inner surface of the outer cylinder) is preferably in the range of 3-5 $\mu$m and the inner surface of the outer cylinder (or the outer surface of the inner cylinder) is preferably planished.

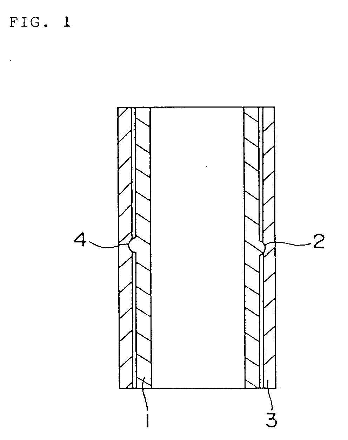

One example of the two-piece guide roller according to the present invention is shown in Figure 1, in which the inner cylinder 1 has a circumferential protuberance 2 on a center portion of its outer surface, and the outer cylinder 3 has a circumferential groove 4 on a center portion of its inner surface which is complemental with the protuberance 2. The inner cylinder 1 and the outer cylinder 3 are engaged with snap-fitting so that they can rotate relative to each other.

A height of the protuberance depends on diameters of the inner cylinder and/or the outer cylinder. The height is preferably in the range of about 0.1-0.15 mm, more preferably about 0.12 mm in the case where the outer diameter of the inner cylinder is about 4.9-5.1 mm. A longitudinal length of the inner cylinder 1 is preferably longer than a longitudinal length of the outer cylinder 3. In the case in which the inner cylinder 1 is longer than the outer cylinder 3, the inner cylinder may be preferably assembled with the outer cylinder so that the inner cylinder protrudes from each end of the outer cylinder 3 by the same length.

A difference between the outer diameter of the inner cylinder and the inner diameter of the outer cylinder (that is, clearance between the cylinders) depends on the diameter of the inner cylinder or the outer cylinder. Generally, the difference is in the range of about 0.1-0.3 mm, preferably about 0.15 mm. Such a difference will make no problem about the tape running.

As described above, the cassette tape is conventionally in sliding direct contact with the surface of the metal guide pin, which results in tendency of occurrence of the fine scratches. Such scratches cause the dropouts during the playback mode of the VTR. In order to reduce the occurrence of the scratches, super fine particles or lubricants have to be applied on the tape so that optimum surface roughness and/or optimum sliding properties of the tape can be achieved. As to the metal guide pin, attention has to be paid to grinding and abrading the metal guide pin so as to avoid the occurrence of the scratches on the tape.

On the contrary, since, in the two-piece guide roller according to the present invention, the outer cylinder turns together with the tape and thus, there is no sliding direct contact between the outer cylinder and the tape, the occurrence of the scratches is reduced or eliminated. An optimum braking property of the outer cylinder to the tape may be achieved by a sliding resistance between the inner cylinder and the outer cylinder. Therefore, no complicated treatment and/or no special coating should be applied to the tape in order to conform to the guide roller.

Hitherto, various guide pins have been proposed to replace the metal guide pin outer surface of which had to be ground and abraded precisely. A resin made guide pin generally has a problem of adhesion phenomenon of the resin made guide pin with the sliding tape due to a large friction resistance. Such a phenomenon may make tape running stop at the last stage of a FF or a RW mode especially when used in a VTR apparatus operated with a battery, even though it causes no problem on the usual playback mode of the tape running.

In the case of the two-piece guide roller according to the present invention, a coefficient of dynamic friction is reduced by proper selection of the combination of different materials for the inner and outer cylinders, whereby the tape can run smoothly even when a large torque is applied as on the last stage of the FF or the RW mode. This is because it is very rare for the adhesive phenomenon to occur between the different materials. Examples of the particularly preferred combination of the resin materials are a PBT resin with a polyacetal resin and a polyacetal resin with a polyamide resin. In addition, a thermoplastic resin such as a polyethylene resin and a polycarbonate resin with one of a PBT resin, a polyacetal resin and a polyamide resin is also preferred. Further, any alloy of the above resins is also preferred. The resin may contain a conductive filler such as a carbon fiber and a carbon black.

As described above, the two-piece guide roller according to the present invention, the inner cylinder is made of the material which is different from the material of which the outer cylinder is made. In addition, the function of the outer cylinder is different from that of the inner cylinder. That is, the outer cylinder contact-turns together with the tape and the outer cylinder turns relative to the inner cylinder.

When the one-piece metal or resin made guide pin is used, the number of scratches gets larger and the depth of the scratches gets deeper with the number of usage of the tape, whereby the number of the dropouts is increased.

On the contrary, the two-piece roller according to the present invention causes substantially no scratches even when the number of the usage gets so many, so that the tape is scratch-free semi-permanently.

In order to decrease the sliding resistance of the resin made one-piece guide pin with the tape, a special grade resin might be used which contains a special lubricant which can improve a sliding character of the resin. For example, an ester based resin and an oil lubricant containing resin might be used. However, it is impossible to use such a resin since the special lubricant is transferred from the guide pin to the tape.

In the case of the two-piece guide roller according to the present invention, the inner cylinder may be made of the special grade resin and the outer cylinder may be made of a resin which is different from the inner cylinder resin and which has no adverse effect on the tape. As a result, the choice of the material combination for the inner cylinder and the outer cylinder is much wider than the that of the material for the one-piece guide pin. Since the material choice is wider and the guide roller is composed of two pieces, the two-piece guide roller according to the present invention can be easily adapted to various optimum torques, which various tape making companies request the guide roller to generate, by selecting a proper combination of the materials each having a different friction factor for the inner cylinder and the outer cylinder and by adjusting the clearance between the outer cylinder and the inner cylinder.

Further, there may be a grease or a very thin film between the outer cylinder and the inner cylinder which adjusts the sliding property of the both cylinders. The grease is preferably based on silicone. As the very thin film, a film having a thickness of 50-60 $\mu$m is preferably used which is produced by calendering and stretching a high density polyethylene.

In one preferred embodiment, the two-piece guide roller is assembled together by the snap-fitting, so that two-piece guide roller does not disconnect into two cylinders even when it is handled or picked up by a feeder on a cassette tape assembly line. The assembly of the two-piece guide roller is completed by forcing the protuberance on the inner cylinder outer surface into the groove on the outer cylinder inner surface. This assembly is made with utilizing an elasticity of the resin. Therefore, inserting the inner cylinder into the outer cylinder is relatively easily carried out but the protuberance is not easily removed from the groove once it has been fitted in the groove. Between the protuberance and the groove, there is the proper clearance so that the inner cylinder can rotate relative to the outer cylinder substantially without any resistance.

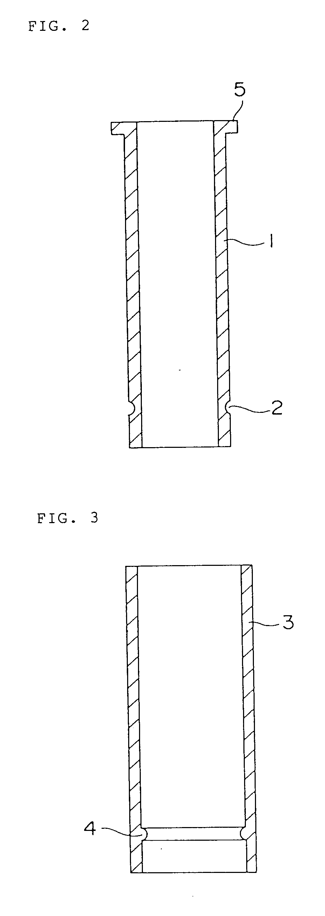

In another embodiment of the two-piece guide roller according to the present invention, the inner cylinder 1 may have a flange 5 at its end as shown in Figure 2. The groove 2 may be provided, for example, on the other end portion of the inner cylinder for the snap-fitting. In this embodiment, it is preferred that the outer diameter of the flange 5 is substantially the same as the outer diameter of the outer cylinder 3 as shown in Figure 3. The flange at the end of the inner cylinder makes assembly of the two-piece guide roller simpler since the flange can locate the outer cylinder as a stopper which prevents over-insertion of the inner cylinder. A thickness of the flange is preferably in the range of 0.8-0.9 mm.

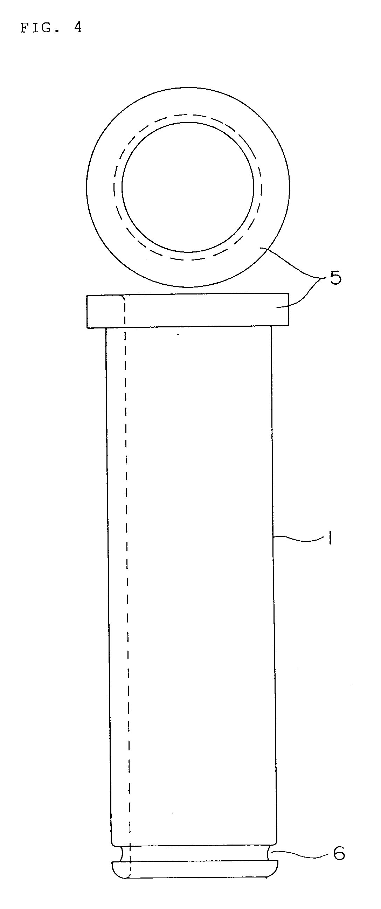

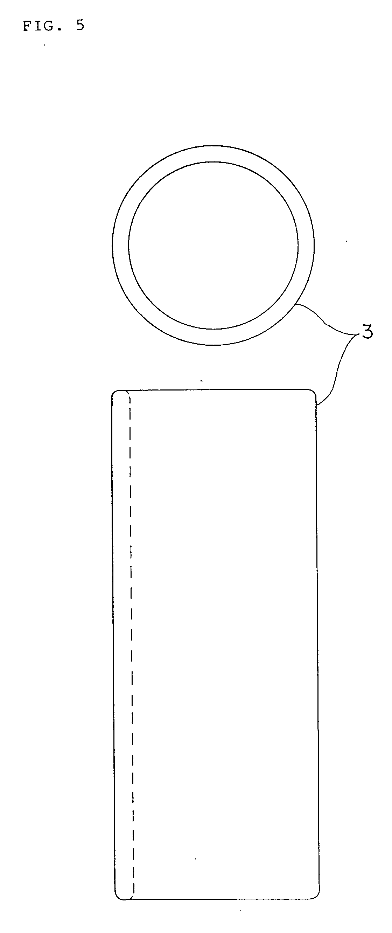

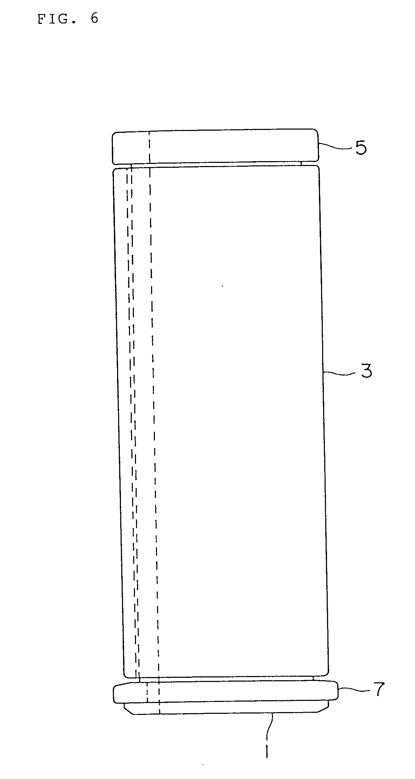

In a further preferred embodiment of the two-piece roller according to the present invention, the inner cylinder, which has the flange on its one end as described above, has a circumferential groove 6 on its other end portion so that a cut-ring washer 7 can be placed in the groove 6. The inner cylinder 1 of this embodiment is shown in Figure 4 (as a plane view and a side view) , the outer cylinder 2 suitable for this embodiment is shown in Figure 5 (as a plane view and a side view), and the assembled two-piece guide roller is shown in Figure 6 (as a side view). It is clearly understood from Figures 4 and 5 that there are no protuberance and no groove for the snap-fitting on the inner and the outer cylinders.

In this embodiment, an extent of ease of assembly is inferior to the snap-fitting assembly. However, it should be noted that movement of the outer cylinder along a direction of its axis direction (that is, vertical movement) may be reduced. In the embodiment as shown in Figure 6, an extent to which the outer cylinder can be moved along its axis is smaller than that of the snap-fitting assembly since such movement of the outer cylinder is limited by the cut-ring washer 7. In addition, since the outer cylinder and the inner cylinder need not have the protuberance or groove for the snap-fitting, the clearance between the inner cylinder and the outer cylinder can be smaller than that of the snap-fitting assembly. An end surface of the outer cylinder contacts not with a cassette half but with the cut-ring washer, which prevents abrasion of the cassette half due to rotary contact of the half with the end surface of the outer cylinder.

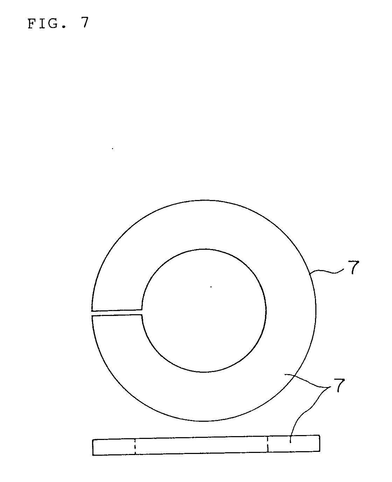

The cut-ring washer 7 is not critical in its shape provided that it can be placed tightly in the groove 6. Preferably, a shape of a cross-section of the cut-ring washer 7 is complement to a shape of a cross-section of the groove 6. The cut-ring washer has its shape such that a portion of a ring washer has been cut or cut away and the cut portion can be opened so that the ring may be fitted into the groove on the inner cylinder. Once the cut-ring washer is fitted in the groove, it engages tightly with the inner cylinder in the groove due to its elasticity. Generally, when the cross-sectional shape of the groove is rectangular, the cross-sectional shape of the cut-ring washer is preferably rectangular. However, any other cross-sectional shape may be used provided that the cut-ring washer does not move after the fitting. One embodiment of the cut-ring washer is shown in Figure 7 (as a plane view and a side view). A thickness of the cut-ring washer is preferably in the range of about 0.4-0.5 mm.

The cut-ring washer may be made of any material which does not affect adversely to the tape, the inner cylinder and the outer cylinder. For example, the cut-ring washer may be preferably made of a polyacetal resin, a polyamide resin or a polyester resin. The cut-ring washer may be produced by stamping out from a calendered tape of the resin. In place of the resin tape, a metal plate can be used.

In the assembled two-piece guide roller, not only either one end may not be fixed to a top of the roller and the other end may not be fixed to a bottom of the roller, but also either longitudinal edge may not be fixed to a right edge or a left edge of the roller so that circumferential location of the guide roller is not necessary. Therefore, it is very easy to pick up and align the guide roller, for example, when the guide roller is placed in the cassette half.

The outer surface of the outer cylinder is difficult to be damaged because of an inherent property of the engineering plastic. As a result, handling of the outer cylinder, the inner cylinder and the assembled two-piece guide roller is very easy, compared with the metal guide pin, during steps of assembly, wrapping, transportation of the roller and assembly of the cassette tape.

When the two-piece guide roller is used in a conventional cassette tape in place of the metal guide pin, four bosses (two of which are on an upper half of the cassette case and two of which are on a lower half) are usually to be made thinner so that the bosses can conform to the inner diameter of the inner cylinders (that is, the bosses can be inserted into the inner cylinders).

In order to make the bosses thinner, metal pieces are fitted in cavity portions of an existing mold for the cassette half, which portions are complement with the bosses, and a bore is made in each metal piece so that the bore can mold a boss which can conform to the inner diameter of the inner cylinder. This is greatly advantageous that an existing mold can be used for the two-piece guide roller with a least and easy modification of the existing mold as described above.

When a tape is installed in a cassette case in a cassette tape production factory or a software company, the tape may be loaded in the half of the cassette case through the guide roller at a high speed mode (V-zero loading) conditions including, for example, a tape feeding speed of 1000 m/min. and a tape tension of 100 g. It should be noted that although performance of the guide roller after the tape has been installed in the cassette case is important, performance of the guide roller when the tape is loaded in the cassette case is also very important.

When a friction factor of the guide roller is large and/or the guide roller causes scratches because of contact of the tape with the roller at a high speed during the loading of the tape, it is impossible to use such a guide roller for the high speed loading.

According to the two-piece guide roller of the present invention, since the outer cylinder turns together with the tape, there is very little possibility that severe scratches are caused on the tape even during the high speed loading step of the tape.

Sliding resistance between the metal (stainless steel) pin and the tape is generally in the range of 20-30 g. The sliding resistance between the two-piece guide roller of the present invention and the tape is also in the range of about 20-30 g. Thus, when two-piece guide roller is used, the tape can be loaded in the cassette case at the same high speed as when the conventional stainless steel pin is used.

Example

Molds each for one inner cylinder and one outer cylinder were formed and the two-piece guide rollers of the present invention were produced with resin combinations shown in the below table using a 20-ton injection molding machine.

Table

| Combination | Inner cylinder | Outer cylinder |
|---|---|---|
| 1 | POM (copolymer) | Polyamide 66 type |
| 2 | POM (copolymer) | PBT |
| POM: Polyacetal resin (Tenac 8520 commercially available from Asahi Chemical Industry, Japan) | | |
| Polyamide 66 type: Amilan CM 3001 (commercially available from Toray Industries Inc., Japan) | | |
| PBT: Polybutylene terephthalate resin (Toray PBT commercially available from Toray Industries Inc., Japan) | | |

Commercially available VTR cassette tapes (VHS mode, 120 min.) of a normal grade were modified by making two pairs of bosses of each cassette case thinner in order to conform to the inner cylinder of the two-piece guide roller. In this way, the commercially available cassette tapes can be assembled using existing self-tapping screws after the installation of the two-piece guide rollers.

As shown in Figure 2, the inner cylinder 1 had a groove 2 having a height of 0.2 mm and the outer cylinder 3 had a protuberance 4 having a height of about 0.2 mm. Both cylinders were engaged by the snap-fitting.

Since a sufficient clearance (about 0.2 mm) between the outer cylinder and the inner cylinder was provided, the outer cylinder could turn relative to the inner cylinder smoothly.

Two two-piece guide rollers were installed in the same positions of the modified cassette case as described above in which positions the metal pins had been located, and then the cassette halves were assembled into a cassette tape with the self-tapping screws.

The assembled cassette tape was set in a commercial VTR apparatus, and recording was carried out for 120 minutes at a standard mode. The tape was played back for checking, and no dropout, trembling and other change were observed.

Then, the tape was run in various combinations of a FF (forced feed) mode, a RW (rewinding) mode, a high speed RW mode and a PB (playback) mode. After the running of the various combinations, time periods required to finish the FF mode, the RW mode and the high speed RW mode were measured. In addition, after finishing the running tests, the surface conditions of the tapes were examined and estimated with various kinds of the surface roughness parameters (Rmax, RA and RZ). The results are shown in the below Tables 1 and 2.

Table 1

| Cassette No. (120 min.) | 1 | 2 | 3 |
|---|---|---|---|
| **Guide roller material** | Two-piece | Two-piece | Conventional Stainless Steel (one-piece) |
| Inner cylinder | POM | POM | |
| Outer cylinder | Polyamide | PBT | |
| **Running test** | FF↔HSRW 100 times & PB↔RW 10 times | FF↔HSRW 100 times & PB↔RE 10 times | RE↔HSRW 100 times & PB↔RW 10 times |

Required time period for
Before test

| | 1 | 2 | 3 |
|---|---|---|---|
| FF mode | 3'33"10 | 3'33"90 | 3'33"65 |
| RW mode | 3'29"49 | 3'30"57 | 3'29"87 |
| HSRW mode | 2'10"67 | 2'11"54 | 2'08"43 |

After test

| | 1 | 2 | 3 |
|---|---|---|---|
| FF mode | 3'32"05 | 3'32"15 | 3'32"02 |
| RW mode | 3'28"30 | 3'28"40 | 3'29"60 |
| HSRW mode | 2'10"82 | 2'12"15 | 2'08"52 |

POM: Polyacetal resin (copolymer)

Polyamide: Polyamide 66 type

PBT: Polybutylene terephthalate resin

FF: Forced feed mode

RE: Rewind mode

HSRW (HSRW): High speed rewind mode

PB: Playback mode

### Table 2

| Cassette No.(120 min.) | 1 | 2 | 3 |
|---|---|---|---|

#### Guide roller material

| | | | Conventional |
|---|---|---|---|
| | Two-piece | Two-piece | Stainless Steel (one-piece) |
| Inner cylinder | POM | POM | |
| Outer cylinder | Polyamide | PBT | |

#### Surface roughness
after FF↔HSRW 100 times
& PB↔RW 10 times

| | | | |
|---|---|---|---|
| Rmax | 0.490 μm | 0.480 μm | 0.555 μm |
| RZ | 0.300 μm | 0.310 μm | 0.450 μm |
| RA | 0.031 μm | 0.032 μm | 0.041 μm |

Note: Original cassette tape had 0.300 μm of Rmax, 0.250 μm of RZ and 0.032 μm of RA.

In the above tables, "FF↔HSRW 100 times & PB↔RW 10 times" means that one FF mode plus one HSRW mode operation was repeated 100 times and then one BP mode plus one RW mode was repeated 10 times.

The surface roughnesses were measured by a surface roughness measurement apparatus commercially available from Kosaka-Laboratory Co., Japan. Rmax means a maximum height of a cross-sectional curve of a tape, RZ means a 10 point average surface roughness, and RA means a center line average surface roughness, each value was measured according to JIS (Japanese Industrial Standards) B0601-82 and expressed in a unit of [μm].

It is clearly seen from the above results that the performance of the two-piece guide roller of the present invention is the same as that of the conventional metal guide pin, and as to the occurrence of the scratches caused by the sliding contact during the tape running, the two-piece guide roller of the present invention is much superior to the metal pin.

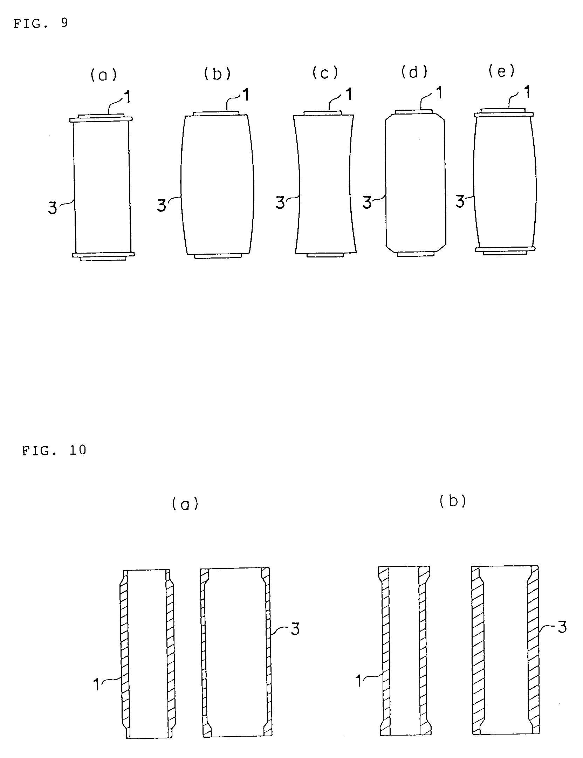

In addition to the embodiments as shown in Figures 1, 2 and 3, the two-piece guide roller according to the present invention can be modified in various manners. For example, in order to ensure stable tape running and to prevent damage of tape edges, flanges may be provided on each ends of the outer cylinder as shown in Figure 9 (a), the outer surface of the outer cylinder may have a convex or concave crown shape as shown in Figure 9 (b) or 9 (c), a corner portion of the outer cylinder may be beveled or of an "R" shape as shown in Figure 9 (d), or the embodiment having the flanges may be combined with embodiment having the convex crown outer surface as shown in Figure 9 (e).

In the embodiment shown in Figures 2 and 3, the groove 2 and the protuberance 4 are positioned near one end of the guide roller. When they are positioned on the center portion surfaces of the inner and the outer cylinders, upper half portions of the cylinders and the lower half portions of the cylinders are substantially in a symmetry relation, whereby the assembly of the two-piece guide roller gets much easier. In addition, the groove may be provided on the outer cylinder, and the protuberance may be provided on the inner cylinder as shown in Figure 1.

In a further embodiment, the groove and the protuberance are provided at each end of the inner cylinder and the outer cylinder as shown in Figures 10 (a) and (b). In such an embodiment, an extent of being a straight cylinder may be improved especially in the outer cylinder.

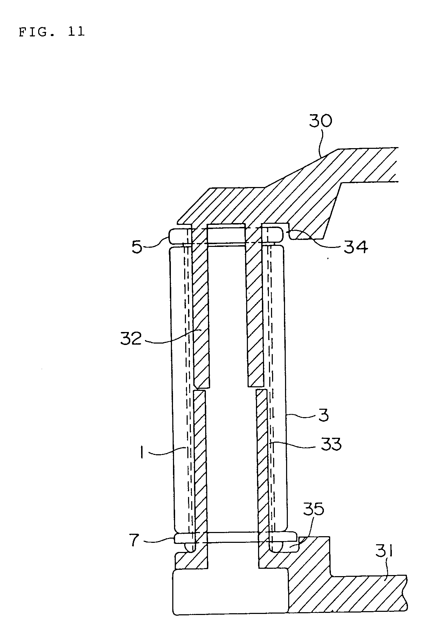

In the two-piece guide roller according to the present invention in which the inner cylinder 1 has a flange 5 and a cut-ring washer 7 on its each end, the length of the outer cylinder may be extended by at most a thickness of the flange (0.8-0.9 mm) and a length from the cut-ring washer to the end of the inner cylinder (0.8-0.9 mm) when at least portions of the flange 5 and the cut-ring washer 7 are placed in concave portions 34 and 35 of an upper cassette half and a lower cassette half as shown in Figure 11. That is, an effective length (or an effective width from a view point of the tape) of the outer cylinder can be extended by at most 1.6-1.8 mm. This can provide a safety margin to a vertical movement of the tape running. In Figure 11, the cassette halves are shown in a cross-sectional view, and the guide roller is shown in a side view.

In the case in which the two-piece guide roller has the flange or the cut-ring washer, a concave portion having a depth of at least a portion of the thickness of the cut-ring washer or the flange is preferably provided at the base of the boss 32 or 33 of the cassette half on which the inner cylinder is installed, whereby at least a portion of the cut-ring washer or the flange can be placed in the concave portion.

## Claims

1. A two-piece guide roller comprising an inner cylinder and an outer cylinder.

2. The two-piece guide roller according to claim 1 in which the inner cylinder and the outer cylinder are engaged to each other by snap-fitting.

3. The two-piece guide roller according to claim 1 in which the inner cylinder is made of a material which is different from a material of which the outer cylinder is made.

4. The two-piece guide roller according to claim 1 in which a function of the inner cylinder is different from that of the outer cylinder.

5. The two-piece guide roller according to claim 1 in which an outer surface of the inner cylinder is such that a contact area between the outer surface of the inner cylinder and an inner surface of the outer cylinder is small.

6. The two-piece guide roller according to claim 1 in which the inner cylinder has a flange on its one end and a circumferential groove on an outer surface of its other end, and the outer cylinder is supported by a cut-ring washer fitted in the groove.

7. A cassette tape having two-piece guide rollers in which the two-piece guide roller comprises an inner cylinder and an outer cylinder, the inner cylinder has a flange on its one end and a circumferential groove on an outer surface of its other end, the outer cylinder is supported by a cut-ring washer fitted in the groove, and at least one of cassette halves has at least one concave portion at the bottom of at least one boss of the halves which concave portion can receive at least a portion of the flange or the cut-ring washer.

FIG. 1

FIG. 2

FIG. 3

FIG. 4

FIG. 5

3

FIG. 6

FIG. 7

FIG. 8

FIG. 9

(a)   (b)   (c)   (d)   (e)

FIG. 10

(a)   (b)

FIG. 11